# EUROPEAN PATENT APPLICATION

(11) **EP 2 078 825 A2**
(43) Date of publication of application: **15.07.2009**
(21) Application number: 09000165.2
(22) Date of filing: 08.01.2009
(51) Int. Cl.: F01D 11/02, F01D 25/12, F01D 25/14, F01D 25/18

(54) **Turbocharger**

(30) Priority: 10.01.2008 JP 2008003461
(71) Applicant: JTEKT Corporation, Osaka-shi Osaka 542-8502 (JP)
(72) Inventor: Ueno, Hiroshi, Osaka-shi Osaka 542-8502 (JP); Shiraki, Toshihiko, Osaka-shi Osaka 542-8502 (JP); Oshima, Akio, Osaka-shi Osaka 542-8502 (JP)
(74) Representative: Schaeberle, Steffen

(57) **Abstract**

A sealing structure includes a labyrinth seal provided between a housing and an outer periphery of an end portion of a turbine shaft on a turbine wheel side, and a piston ring seal disposed on a side toward a center of the turbine shaft in an axial direction thereof from a position on the turbine shaft at which the labyrinth seal is provided, and a ring groove is formed along a circumferential direction of the housing in a middle portion of the labyrinth seal to reverse a flow direction of exhaust gas entering from the exhaust passage.

## Description

### BACKGROUND OF THE INVENTION

### 1. Field of the Invention

This invention relates to a turbocharger which is employed in automobiles or the like.

### 2. Related Art

Turbochargers which enhance output of internal combustion engines by blowing compressed air with increased density into inside of the internal combustion engines are known as, for example, supercharger, turbocharger or the like.

A turbocharger, for example, is configured such that a turbine wheel is disposed in an exhaust passage while a compressor wheel is disposed in an admission passage in an internal combustion engine such as an automobile engine. These wheels are provided respectively on opposite end portions of a turbine shaft that is housed within a shaft hole of a housing. Within the shaft hole of the housing, rolling bearings support rotatably the turbine shaft. When the turbine wheel is rotated by exhaust gas flowing through the exhaust passage, the turbine shaft and the compressor wheel are rotated so that air inside the admission passage to be fed to the internal combustion engine is compressed.

Further, in the turbocharger as described above, a sealing structure that performs sealing between the shaft hole and the exhaust passage as well as between the shaft hole and the admission passage is provided such that lubricant which is provided with the shaft hole of the housing for lubrication of the rolling bearing is not leaked out toward the exhaust passage and the admission passage and such that gas such as air or exhaust gas does not flow in the housing from the exhaust passage and the admission passage. For example, piston ring seals are provided on outer peripheries of opposite ends of the turbine shaft in its axial direction to form the sealing structure performing sealing between the shaft hole and the exhaust passage as well as between the shaft hole and the admission passage (See, for example, JP-A-H11-101128 Publication).

In the conventional turbocharger, it is difficult to completely shut out leakage of the lubricant from the shaft hole of the housing to the exhaust passage and flow-in of the gas from the admission passage or the exhaust passage to the shaft hole. However, as reduction of lubricant contamination in the exhaust gas is required in view of environmental consciousness, it is important to shut out fluid communication between the exhaust passage and the shaft hole of the housing as much as possible.

### SUMMARY OF THE INVENTION

Accordingly, the object of the invention is to provide a turbocharger in which the fluid communication between the exhaust passage and the shaft hole of the housing is effectively suppressed.

A turbocharger according to the invention includes:
a turbine shaft;
a turbine wheel disposed on a first end portion of the turbine shaft in an exhaust passage of an internal combustion engine;
a compressor wheel disposed on a second end portion of the turbine shaft in an admission passage of the internal combustion engine;
a rolling bearing rotatably supporting the turbine shaft within a shaft hole of a housing; and
a sealing structure performing a sealing between the shaft hole and the exhaust passage,
wherein the sealing structure includes a labyrinth seal provided between an outer periphery of the first end portion of the turbine shaft and the housing, and a piston ring seal disposed on a side toward a center of the turbine shaft in an axial direction thereof from a position on the turbine shaft at which the labyrinth seal is provided, and
wherein a ring groove is formed along a circumferential direction of the housing in a middle portion of the labyrinth seal to reverse a flow direction of exhaust gas entering from the exhaust passage.

According to the above construction, since the labyrinth seal provided between the outer periphery of the end portion of the turbine shaft on the turbine wheel side and the housing is disposed as noncontact structure without being brought into contact with the turbine shaft and the shaft hole of the housing, it is possible to suppress that exhaust gas flows in from the exhaust passage without interfering with rotation of the rolling bearing. Further, it is possible to prevent the leakage of the lubricant to the exhaust passage by the piston ring seal that is disposed on the side toward the center of the turbine shaft in the axial direction thereof from the position on the turbine shaft at which the labyrinth seal is provided. Moreover, by providing such inner/outer double sealing structure, the fluid communication between the exhaust passage and the shaft hole of the housing is further suppressed.

In addition, by forming the ring groove along the circumferential direction of the housing in the middle portion of the labyrinth seal to reverse the flow direction of the exhaust gas entering from the exhaust passage, it is possible to prevent effectively the inflow of the exhaust gas from the exhaust passage.

Further, by providing a coolant water jacket in which coolant water for cooling the turbine shaft is circulated is provided on a radial outer side of the turbine shaft from the position of the housing at which the labyrinth seal is provided, the exhaust passage of the housing can be cooled efficiently without extending a dimension of the turbine shaft in the axial direction thereof. As a result, it is possible to suppress that heat of the exhaust gas passing the exhaust passage is transmitted to the axial hole of the housing.

According to the invention, it is possible to suppress effectively the fluid communication between the exhaust passage and the shaft hole of the housing in the turbocharger.

### BRIEF DESCRIPTION OF THE DRAWINGS

Fig. 1 is a sectional view of a turbocharger according to an embodiment of the invention.
Fig. 2 is an enlarged view of an essential portion of Fig. 1.
Fig. 3 is an enlarged view of a labyrinth seal portion of a turbocharger according to another embodiment of the invention.
Fig. 4 is an enlarged view of a labyrinth seal portion of a turbocharger according to another embodiment of the invention.
Fig. 5 is an enlarged view of a labyrinth seal portion of a turbocharger according to another embodiment of the invention.
Fig. 6 is an enlarged view of a labyrinth seal portion of a turbocharger according to another embodiment of the invention.
Fig. 7 is an enlarged view of a labyrinth seal portion of a turbocharger according to another embodiment of the invention.
Fig. 8 is an enlarged view of a labyrinth seal portion of a turbocharger according to another embodiment of the invention.

### DETAILED DESCRIPTION OF THE PREFERRED EMBODIMENTS

Preferred embodiments of the present invention will now be described in detail with reference to the drawings.

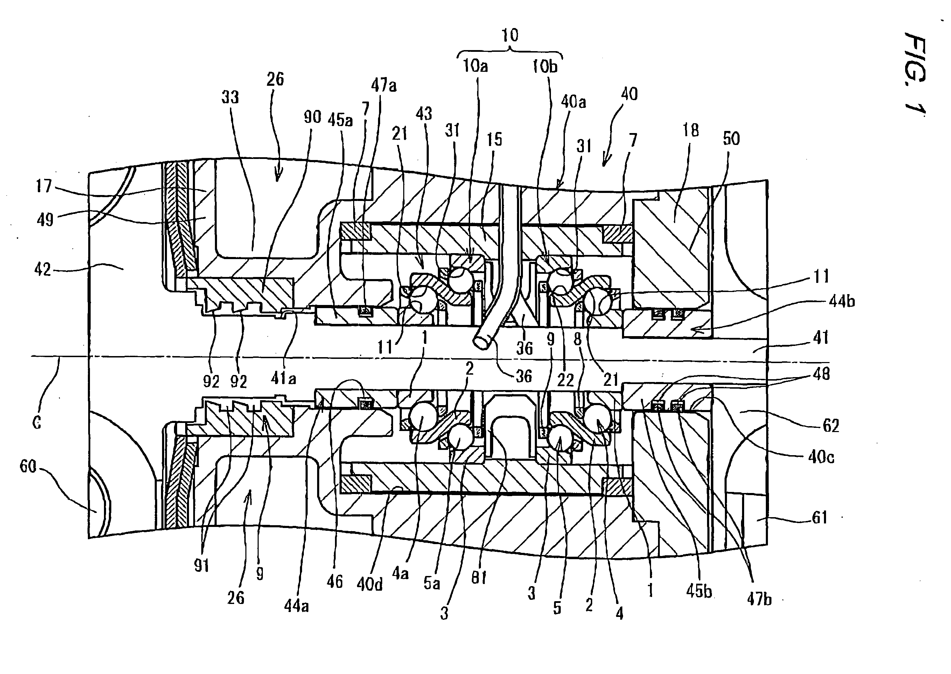

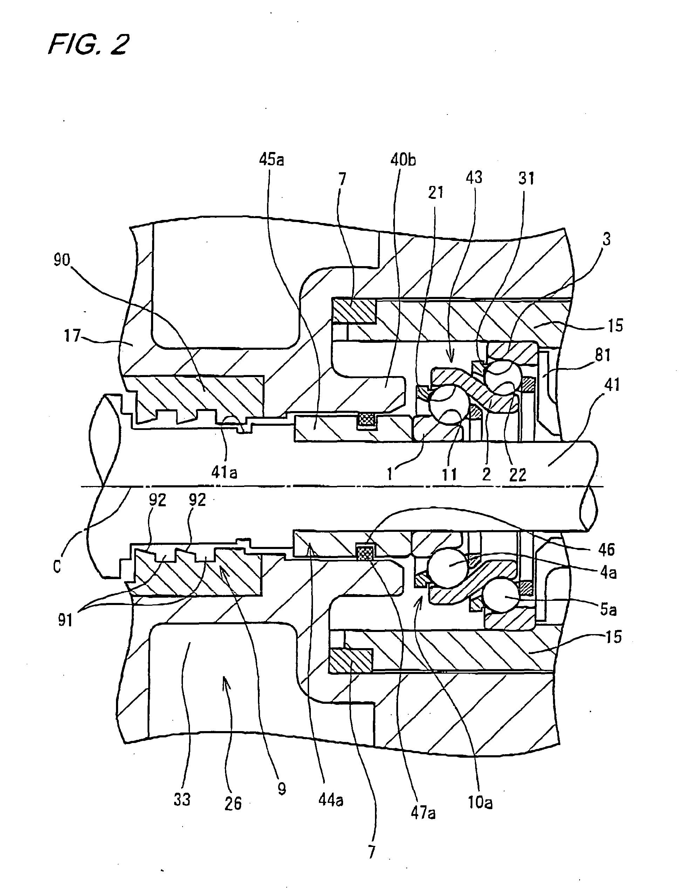

Fig. 1 is a sectional view of a turbocharger according to an embodiment of the turbocharger. Fig. 2 is an enlarged view of an essential portion of Fig. 1. The turbocharger of the embodiment is a turbocharger for an automobile engine, and includes a housing 40, and a turbine shaft 41 housed in the housing 40 so as to be supported coaxially with an axis C by being inserted into a pair of rolling bearings 10a, 10b disposed apart from each other along the direction of axis C within the housing 40. Further, in an exhaust passage 60, a turbine wheel 42 is provided on one end portion of the turbine shaft 41 and in an admission passage 61, a compressor wheel 62 is provided on the other end portion of the turbine shaft 41.

The housing 40 includes a housing body 40a. The housing body 40a has a shaft hole 43 at a center portion thereof that is formed in a substantially cylindrical hole coincided with the axis C. In the shaft hole 43, a tubular bearing holding member 15 is fitted into an inner periphery 40d of the housing body 40a with a gap. The pair of the rolling bearings 10a, 10b are fitted into the bearing holding member 15 so as to support the turbine shaft 41 housed in the shaft hole 43 rotatably around the axis C.

The pair of the rolling bearings 10a, 10b (hereinafter called "rolling bearing(s) 10") are provided with the same structure and disposed symmetrically in the shaft hole 43 along the left and right direction in Fig. 1. A preload in the axial direction is applied to the rolling bearings 10a, 10b by urging the rolling bearings 10a, 10b outwardly in the axial direction with an urging member 81 disposed between the rolling bearing 10a,10b.

The rolling bearing 10 includes an inner ring 1, an outer ring 3 and an intermediate ring 2 disposed between the inner ring 1 and the outer ring 3. A first rolling element set 4 and a second rolling element set 5 are arranged between the intermediate ring 2 and the inner ring 1, and between the intermediate ring 2 and the outer ring 3, respectively. The first and second rolling element sets 4,5 are provided with balls 4a,5a.

As shown in Fig. 1, in the rolling bearing 10, an inner peripheral surface of the inner ring 1 serves as a fitting surface to the turbine shaft 41 such that the inner ring 1 is fitted around the turbine shaft 41. A first bearing raceway 11 with which the balls 4a of the first rolling element set 4 are brought into contact is formed on an outer peripheral surface of the inner ring 1. An outer peripheral surface of the outer ring 3 of the rolling bearing 10 is fixed to an inner periphery of the bearing holding member 15. A second bearing raceway 31 with which the balls 5a of the second rolling element set 5 are brought into contact is formed on an inner peripheral surface of the outer ring 3. The intermediate ring 2 has a bent shape in its cross section extended along the axial direction of the bearing 10. A third bearing raceway 21 with which the balls 4a of the first rolling element set 4 are brought into contact is formed on a part of an inner peripheral surface of the intermediate ring 2. A fourth bearing raceway 22 with which the balls 5a of the second rolling element set 5 are brought into contact is formed on a part of an outer peripheral surface of the intermediate ring 2.

The plural balls 4a of the first rolling element set 4 are held by a cage 8 along a circumference of a circle that is centered at the axis C. The plural balls 5a of the second rolling element set are held by a cage 9 along a circumference of another circle that is centered at the axis C. The balls 4a of the first rolling element set 4 and the balls 5a of the second rolling element set 5 have the same ball diameter one another. The balls 4a of the first rolling element set 4 are brought into contact with the first bearing raceway 11 and the third bearing raceway 21 forming an opposite pair diagonally (namely, angular contact). The balls 5a of the second rolling element set 5 are brought into contact with the fourth bearing raceway 22 and the second bearing raceway 31 forming another opposite pair diagonally. The contact angle in both angular contacts is set to be the same, for example, to be 15° in Fig. 1. Accordingly, the rolling bearing 10 is capable of bearing load in the direction of the axis C (axial direction load). Further, since the rolling bearing 10 is arranged along the axial direction extending in the direction of the axis C, it provides a structure having a damper function in the axial direction.

Damper members 7 are provided on outer peripheral surfaces of the bearing holding member 15 at its opposite ends in the direction of the axis C to lessen vibrations generated due to rotation of the turbine shaft 41. The damper member 7 is fabricated by braiding metal wires to form a ring shape with a rectangular cross section. An outer peripheral surface of the damper member 7 is brought into contact with the inner periphery 40d of the housing body 40a, There are formed gaps (or voids) partially or entirely between adjacent metal wires that form the damper member 7 The damper member 7 is configured as a whole to be elastically deformable (contractible) in the radial direction and the direction of the axis C by allowing elastic deformation of the metal wires within the gaps, or displacement among adjacent wires in longitudinal directions of the wires in the damper member. The damper member 7 is formed to have an outer diameter that is slightly larger than an inner diameter of the shaft hole 43 so as to be interposed between the bearing holding member 15 and the shaft hole 43 in a compressed manner with a predetermined fitting margin in the radial direction.

The gaps formed between the metal wires in the damper member 7 are filled with lubricant. Fluorinated grease is used for such lubricant for example.

By providing the damper member 7, the vibration transmitted from the turbine shaft 41 to the bearing holding member 15 through the rolling bearings 10 is damped by the damper members 7 and transmitted to the housing 40 in the turbocharger. At this time, the damper members 7 are elastically deformable in the radial direction and the direction of the axis C. Therefore, the vibration can be damped three-dimensionally or in all directions and an excellent damping function is performed. Further, not only elastic deformation of the metal wires themselves but frictions come from the braiding structure and entanglement of the metal wires also serve to store and dissipate the vibration energy in all directions beyond simple effect of viscoelasticity.

In addition, since the damper member 7 is formed with metal wires, excellent heat resistance can be also provided. Therefore, it is suitable for a damper means for a turbo charger used in very high temperature.

Further, since grease is filled in the gaps of the wires in the damper member 7, wires are hardly worn by being rubbed against each other.

Furthermore, by inserting the damper member 7 as described above between the bearing holding member 15 and the housing 40, any oil film damper provided conventionally is not needed. Accordingly, it is possible to accomplish simplification of the structure of the housing 40 as well as cost reduction.

In the turbocharger as described above, a lace member 36 is provided such that one end thereof is put into a tank portion in which the lubricant is stored and the other end thereof is placed in the rolling bearing 10 within the shaft hole 43. Thus, lubrication of the rolling bearing 10 is conducted by feeding the lubricant from the tank portion (not-shown) to the shaft hole 43 utilizing capillary action of the lace member 36. By means of the lace member 36, which does not require any power, the lubricant is fed to the rolling bearing 10 in the shaft hole 43 even in a condition that rotation of the turbine shaft 43 is stopped. For the lubricant stored in the tank portion, oil which is normally used for lubrication of the rolling bearing and which has a suitable viscosity to be able to percolate in the lace member 36 can be used in the embodiment. Among such oils, oil which is superior to engine oils in seizure resistant property is preferably used, for example, chemical synthetic oil such as polyol ester oil, diester oil, aromatic ester oil, synthetic hydrocarbon oil, ether oil, silicon oil and fluorine oil.

Inside of the housing body 40a of the housing 40, a coolant water jacket 26 in which coolant water is circulated is provided. The coolant water jacket 26 is formed so as to surround the turbine shaft 41 on a radial outer side of the rolling bearings 10 from one end portion 49 on the exhaust passage 60 side to the other end portion 50 on the admission passage 61 side in the housing body 40a. In other words, the coolant water jacket 26 is formed so as to surround the shaft hole 43 along the circumferential direction of the turbine shaft 41.

Further, in the coolant water jacket 26, an annular recess 33 indenting inwardly from the inner peripheral surface 43a of the shaft hole 43 in the radial direction of the turbine shaft 41 is formed on the one end portion 49 of the housing body 40a. Thus, by interposing the annular recess 33 between the turbine wheel 42 and the rolling bearing 10a in the axial direction, it is possible to conduct heat exchange effectively between heat transmitted from the exhaust passage 60 and the coolant water in the annular recess 33. Therefore, it is possible to reduce heat transmission from the turbine wheel 42 side to the shaft hole 43. As a result, it is possible to suppress thermal degradation of the lubricant and the rolling bearing 10 provided within the shaft hole 43.

Furthermore, in the turbocharger according to the embodiment, a piston ring seal 44a and a labyrinth seal 9 are provided between the rolling bearing 10 and the turbine wheel 42 so as to be adjacent to each other along the axis C in order to form a seal structure to suppress fluid communication between the shaft hole 43 and the exhaust passage 60.

As shown in Fig. 2, the piston ring seal 44a is adjacent to the rolling bearing 10a in the direction of the axis C. The piston ring seal 44a is configured by disposing a piston ring 47a between a ring groove 46 formed on an outer peripheral surface of a sleeve 45a that is fitted around the turbine shaft 41 so as to rotate together with the turbine shaft 41 and a cylindrical portion 40b of the housing 40 projecting toward the shaft hole 43. A minute gap is formed between the ring groove 46 and the piston ring 47a so that a gap between the sleeve 45a and the cylindrical portion 40b is closed. By such structure, it is possible to suppress that the lubricant within the shaft hole 43 is moved to the turbine wheel 42 side and also possible to suppress that exhaust gas flows in to the shaft hole 43 from the exhaust passage 60.

As shown in Fig. 2, the labyrinth seal 9 is provided on the turbine wheel 42 side from the piston ring seal 44a. The labyrinth seal 9 is provided by fitting the turbine shaft 41 with a predetermined small gap to a cylindrical sleeve 90 that is provided at a center portion of a sidewall 17 on the exhaust passage 60 side of the housing body 40a.

In the sleeve 90 forming the labyrinth seal, on an intermediate portion thereof along the axis C, two ring grooves 91 provided adjacent to each other are formed in an indented manner in the radial direction. Further, on the turbine shaft 41 side on which the labyrinth seal is formed, a ring groove 41a is formed in an indented manner in the radial direction. On an inner peripheral surface of the sleeve 90, a projection portion 92 is formed so as to have a top portion defined by a tapered surface that is flared out from the turbine wheel 42 side to the shaft hole 43 side. By this structure, the exhaust gas directing from the turbine wheel 42 side to the shaft hole 43 side does not move straightforwardly to the shaft hole 43 side, and it is easily introduced to the ring groove 91. By means of the labyrinth seal 9, when the exhaust gas directing from the turbine wheel 42 side to the shaft hole 43 side reaches at a space defined by the ring groove 91, the projection portion 92 and the outer periphery of the turbine shaft 41, turbulence is generated by pressure change (stepwise pressure decrease) so that the exhaust gas does not easily advance toward the shaft hole 43. Therefore, the sealing performance is improved as compared with the structure in which only a small gap is formed.

As described above, by providing the labyrinth seal 9, the inflow of the exhaust gas from the exhaust passage 60 side into the shaft hole 43 is further suppressed. In addition, the labyrinth seal 9 is noncontact structure, no friction is generated. As a result, performance of the sealing structure is further increased without interfering with rotation of the turbine shaft 41.

In the above described embodiment, the rolling bearing 10 and the lubricant within the shaft hole 43 can be disposed away from the exhaust passage 60 by the labyrinth seal 9, so that heat from the exhaust passage side 60 is not easily transmitted to the rolling bearing 10a and the lubricant within the shaft hole 43. Therefore, it is possible to suppress thermal degradation of these parts. Further, the annular recess 33 of the coolant water jacket 26 is formed by utilizing the additional space on the outer side in the radial direction that is created for providing the labyrinth seal 9. Therefore, it is possible to suppress that the size of the turbocharger is unduely increased.

As shown in Fig. 1, in the turbocharger according to the embodiment, as a sealing structure performing sealing between the shaft hole 43 of the housing 40 and the admission passage 61, a piston ring seal 44b having substantially the same structure as the piston ring seal 44a provided on the exhaust passage 60 side is provided. The piston ring seal 44b is provided adjacent to the rolling bearing 10b in the direction of the axis C. The piston ring seal 44b is configured by disposing two piston rings 47b between two rows of ring grooves 48 formed on an outer peripheral surface of a sleeve 45b that is fitted around the turbine shaft 41 so as to rotate together with the turbine shaft 41 and an inner peripheral surface of an opening portion 40c formed at the center of a sidewall 18 of the housing 40. A minute gap is formed between each ring groove 48 and each piston ring 47b so that the gap between the sleeve 45b and the inner peripheral surface of the opening portion 40c is closed. By such structure, it is possible to suppress that the lubricant in the shaft hole 43 moves into the compressor wheel 62 side and that the exhaust gas flows in to the shaft hole 43 from the admission passage 61 side.

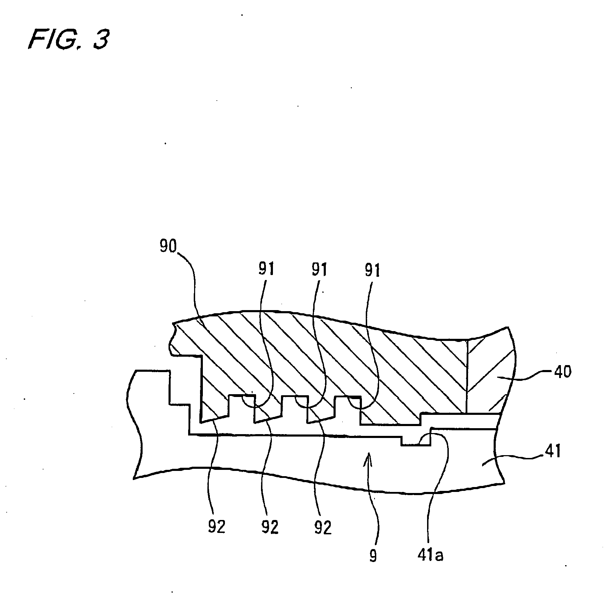

The invention is not limited to the embodiment as described above. For example, the shape of the labyrinth seal 9 is not limited as long as it does not go against the purpose of the invention. Figs. 3-8 show turbochargers according to other embodiments of the invention.

A turbocharger according to an embodiment shown in Fig. 3 has a labyrinth seal 9 in which a ring groove 91 and a projection portion 92, forming a pair, are added in the labyrinth seal 9 shown in Fig. 1 and Fig. 2.

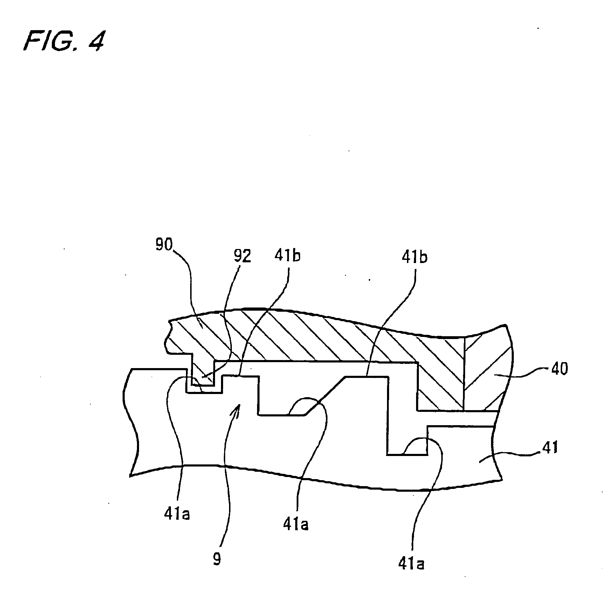

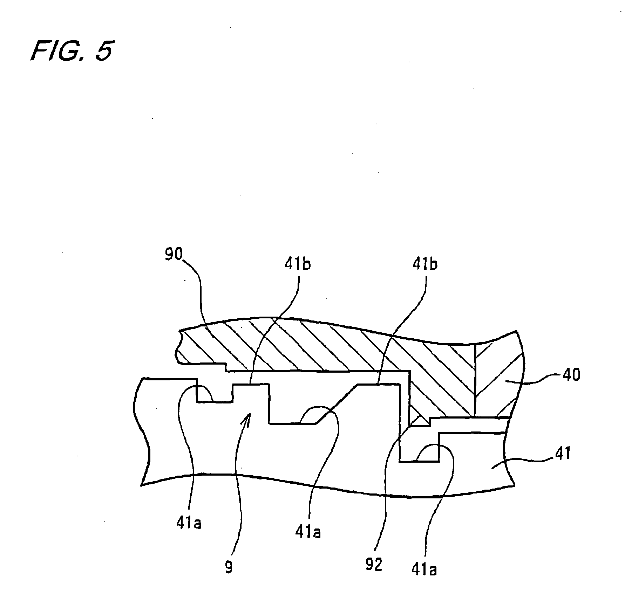

Turbochargers according to embodiments shown in Fig. 4 and Fig. 5 have labyrinth seals 9 in which ring grooves 41a and projection portions 41b with flat top faces are formed in the turbine shaft 41. In the turbocharger according to the embodiment shown in Fig. 4, a projection portion 92 projecting toward the axis C of the housing 40 is formed on an inner peripheral surface of the sleeve 90 on the turbine wheel 42 side. A gap formed between a top end portion of the projection portion 92 and the outer peripheral surface of the turbine shaft 41 is set to be very small. On the other hand, the turbocharger according to the embodiment shown in Fig. 5, a projection portion 92 is formed on an inner peripheral surface of the sleeve 90 on the shaft hole 43 side. A gap formed between the projection portion 92 and the outer peripheral surface of the turbine shaft 41 is set to be very small

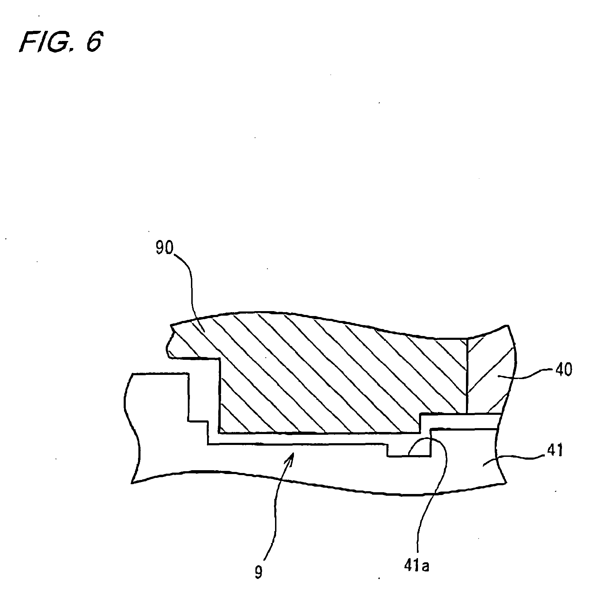

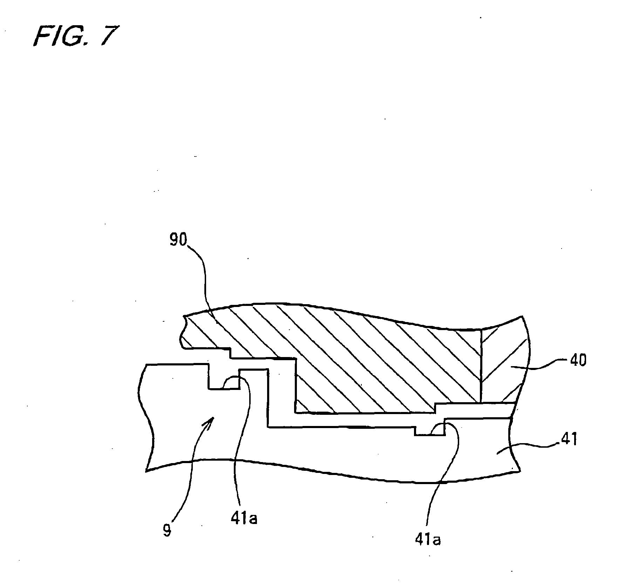

Turbochargers according to other embodiments shown in Figs 6 and 7, each has a labyrinth seal 9 in which ring grooves 41a are formed on the turbine shaft 41.

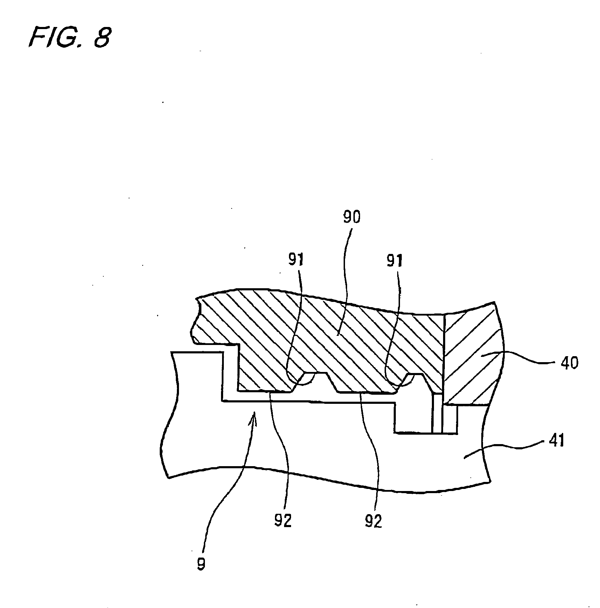

A turbocharger according to an embodiment shown in Fig. 8 has a labyrinth seal 9 in which projection portions 92 with flat top faces and ring grooves 91 are formed. Side faces of the ring grooves 91 and the projection portions 92 are tapered.

Further, in order to further suppress fluid communication between the shaft hole 43 of the housing 40 and the admission passage 61, a labyrinth seal 9 may be formed coaxially on a radial outer side of the piston ring seal 44b of the turbine shaft 41. In such a case, for example, the labyrinth seal 9 is configured by forming a ring groove on the housing 40 opposing to the outer periphery of the turbine shaft 41 at its end on the compressor wheel 62 side, or on the outer periphery of the turbine shaft 41 at its end on the compressor wheel 62 side, so as to extend along the circumferential direction of the turbine shaft 41.

Further, lubrication methods of the rolling bearings 10 may be a full float mode that is generally employed, namely, a mode that the shaft hole 43 in which the rolling bearings 10 are housed is filled up with lubricant (that is commonly used as engine oil, for example).

## Claims

1. A turbocharger comprising:
a turbine shaft;
a turbine wheel disposed on a first end portion of the turbine shaft in an exhaust passage of an internal combustion engine;
a compressor wheel disposed on a second end portion of the turbine shaft in an admission passage of the internal combustion engine;
a rolling bearing rotatably supporting the turbine shaft within a shaft hole of a housing; and
a sealing structure performing a sealing between the shaft hole and the exhaust passage,
wherein the sealing structure includes a labyrinth seal provided between an outer periphery of the first end portion of the turbine shaft and the housing, and a piston ring seal disposed on a side toward a center of the turbine shaft in an axial direction thereof from a position on the turbine shaft at which the labyrinth seal is provided, and
wherein a ring groove is formed along a circumferential direction of the housing in a middle portion of the labyrinth seal to reverse a flow direction of exhaust gas entering from the exhaust passage.

2. A turbocharger according to claim 1, wherein a coolant water jacket in which coolant water for cooling the turbine shaft is circulated is provided on a radial outer side of the turbine shaft from the position of the housing at which the labyrinth seal is provided.
